# EUROPEAN PATENT SPECIFICATION

(11) **EP 1 421 815 B1**
(45) Date of publication and mention of the grant of the patent: **25.01.2006**
(21) Application number: 01978292.9
(22) Date of filing: 21.08.2001
(51) Int. Cl.: H04Q 7/38

(54) **METHOD, SYSTEM AND NETWORK ELEMENT FOR ADDRESSING A CELL RELATED SERVER**
VERFAHREN, SYSTEM UND NETZWERKELEMENT ZUR ADRESSIERUNG EINES ZELLENBEZOGENEN SERVERS
PROCEDE, SYSTEME ET ELEMENT DE RESEAU D'ADRESSAGE D'UN SERVEUR ASSOCIE A UNE CELLULE

(43) Date of publication of application: 26.05.2004
(73) Proprietor: Nokia Corporation, 02150 Espoo (FI)
(72) Inventor: LONGONI, Fabio, E-29017 Malaga (ES); WAHLQVIST, Mattias, 02630 La Roda (Albacete) (ES)
(74) Representative: Eisenführ, Speiser & Partner
(86) International application number: PCT/EP2001/009673
(87) International publication number: WO 2003/019967

(56) References cited:
- TOSKALA A. ET AL.: "IP based UTRAN Architecture" TSG RAN#10, TDOC RP-00-0712, [Online] 6 - 8 December 2000, pages 1-8, XP002200942 Bangkok, Thailand Retrieved from the Internet: <URL:http://www.3gpp.org/ftp/tsg_ran/TSG_R AN/TSGR_10/Docs/PDFs/RP-000712.pdf> [retrieved on 2002-06-03]

## Description

### FIELD OF THE INVENTION

The present invention relates to a method, system and network element for addressing a cell related server in a radio access network (RAN), such as a UTRAN (UMTS Terrestrial RAN), a GERAN (GSM EDGE RAN), an IP (Internet Protocol) related RAN or any other cellular RAN.

### BACKGROUND OF THE INVENTION

As the Internet has grown in popularity and mobile Internet for text-based information and picture messaging is already a reality, the industry has turned its focus on engineering the most cost efficient network for more demanding multimedia services. IP-based networks are considered by many the best way forward and networking technology research and development is by and large centered around IP-technologies.

The development of an IP-based radio access network will bring together a number of radio access network technologies including second generation (2G), third generation (3G) and Wireless Local Area Networks (WLANs). Network operators are shifting from a circuit-switched to a packet-switched technology, while IP-based networks need to expand radio access rapidly, flexibly and cost efficiently.

IP-based radio access networks can be introduced as a smooth evolution from existing GSM (Global System for Mobile communications), EDGE (Enhanced Data Rates for GSM Evolution) and WCDMA (Wideband Code Division Multiple Access) networks. Key benefits of such IP-based radio access networks are distributed architecture with a separation of user and control planes (offering infinite scalability and no bottlenecks), integration of different radio interface technologies into a single radio access network, common radio resource management for optimum use of radio resources, quality of service (QoS) control, and network automation, open interfaces for multi-vendor networks, and compatibility to existing transmission networks.

In such new radio access networks the standardisation body (i.e. 3GPP (3rd Generation Partnership Project)) is introducing some control plane 'servers' that have RAN only functions, e.g. a Serving mobile Location Centre (SMLC) for performing the positioning functions for the mobile station (MS) or user equipment (UE) in the radio access network, and a Common Radio Resource Manager (CRRM) or Common Resource Manager Server (CRMS) for performing radio resource management algorithms based on dynamic status information of cells that do not belong to the same base transceiver station (BTS) or radio network controller (RNC). The SMLC and CRMS are associated to a certain area, where they have the control of a location measurement unit and the radio resource of the cells, respectively.

A Serving RNC (SRNC) controlling a UE may use the SMLC for the calculation of the position of the UE, or the CRRM for the prioritisation of the handover target cell(s) to be performed by the UE (or any other operation affecting the radio resources used by the UE). In doing so, the SRNC need to contact the SMLC and CRMS associated to the cell(s) used by the UE. However, the UE may use cells that are not controlled by the SRNC. This is the case if a cell used by the UE is controlled by a Drift RNC (DRNC) which is any RNC, other than the SRNC, that controls cells used by the UE by providing only resources and radio layer 1 (L1) functions for the UE connection so as to route data transparently between the interface (e.g. lu interface) connecting the radio access network to a core network (CN) and the interface (e.g. lur interface) connecting the DRNC to the SRNC. It is noted that one SRNC may use any of the other RNCs as DRNC.

Thus, if the SRNC wishes to contact the SMLC or the CRMS associated or related to the current cell used by the UE (e.g. for mobile location, for prioritisation of the handover candidate, or other related operations), the problem arises that the address of the CRMS or SMLC controlling the drift cell is not available at the SRNC.

This problem is unknown, since such common servers (CRMS and SMLC) are not yet specified in 3GPP. Discussion on the SMLC standardisation has been up to now focused on a positioning method that does not require the SMLC to receive measurement from the location measurement unit (LMU), thus without facing this problem.

This problem may be solved by pre-configuring the CRMSs and/or SMLCs controlling each own and each possible drift cell (or each possible drift RNC) in the RNC. However, this requires a configuration table which is difficult to manage and reconfigure when the network configuration is changed. Alternatively, the problem may be solved in that the SRNC sends the request for service (location, handover candidate) to a (or one of) predefined SMLC/CRMS, that takes care of forwarding the data to the relevant CRMS/SMLC. Nevertheless, a configuration table defining the predefined CRMS(s)/SMLC(s) is still required. Finally, the SRNC may forward the location/handover priority to the DRNC via the lur interface. The DRNC is then using the SMLC and the CRMS for the evaluation. However, this leads to delay and extra processing of the DRNC and thus to a reduced Quality of Service (QoS).

The problem was described above for a UTRAN environment. In the IP-RAN environment the problem is even bigger since the number of IP-BTSs (IP-Base Transceiver Stations) is greater than the number of RNCs. In IP-RAN, the IP-BTS acts in many aspects like an RNC, so that the number of Drift-BTSs (DBTSs) may become very large.

Document Toskala A. et al., 'IP based UTRAN Architecture' TSG RAN#10 TDOC RP-00-0712, [online] 6-8 December 2000, pages 1-8, XP002200942 Bankok, Thailand, presents briefly the architecture and motivation for the IP based UTRAN Architecture. Further, it discloses a methodology for dynamic association between a radio access network server and a node in an IP based UTRAN architecture. Also scalability and usage of a common resource manager are mentioned. However, whilst this document illustrates aspects of network topology, it is silent on address issues.

### SUMMARY OF THE INVENTION

It is therefore an object of the present invention to provide an addressing procedure by means of which the correct server in the radio access network can be addressed, especially in case the connection is handled by one or more DRNCs or DBTSs.

This object is achieved by a method according to claim 1. Additionally, the above object is achieved by a network element according to claim 10. In addition thereto, the above object is achieved by a network element according to claim 12. Furthermore, the above object is achieved by a system according to claim 14.

Accordingly, the correct server is always addressed based on the server identification given in the response message received from the drift controller functionality. A configuration table and the associated difficulty to manage and reconfigure it when the configuration of the network is changed can thus be avoided. Furthermore, dynamic configurations, fault resilience, etc. are allowed.

Due to the fact that the serving controller can directly contact the server (SMLC/CRMS), delay and extra processing at the drift cell can be avoided.

Further embodiments and advantages will become apparent by the dependent claims.

### BRIEF DESCRIPTION OF THE DRAWINGS

In the following, the present invention will be described in greater detail based on preferred embodiments with reference to the accompanying drawings in which:
Fig. 1 shows a basic architecture of a radio access network in which the present application can be implemented; and
Fig. 2 shows a signaling diagram corresponding to the addressing procedure of according to the preferred embodiment.

### DESCRIPTION OF THE PREFERRED EMBODIMENTS

The preferred embodiment will now be described using the UTRAN terminology. However, the following description is valid for any cellular radio access network with the following change of notation. The described RNC may be replaced by any radio resource controller functionality, such as an IP BTS, the SRNC may be replaced by any controller functionality, such as a serving IP BTS, in charge of controlling a mobile terminal, the DRNC may be replaced by any controller functionality, such as a Drift IP BTS, in charge of controlling a cell, the SMLC may be replaced by any kind of server for position calculating, and the CRRM/CRMS may be replaced by any kind of server for handover prioritization or the like.

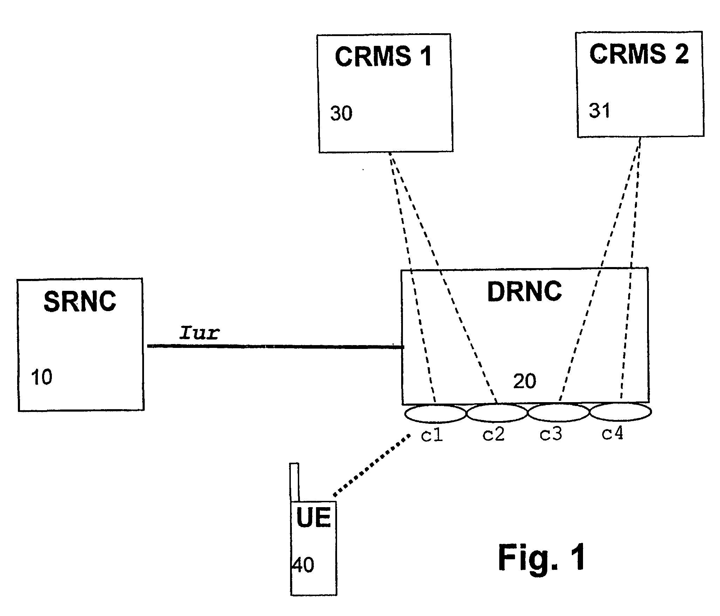

In Fig. 1, a radio access network architecture is shown, where a UE 40, e.g. a mobile terminal or any other radio-connected terminal device, is connected via a base station or node B (not shown) of a first cell c1 to a DRNC 20 in charge of controlling radio resources in four cells c1 to c4. An SRNC 10 in charge of controlling the core network interface (i.e. lu interface) and of terminating the radio resource control (RRC) for the UE 40 is connected to the DRNC 20 via an lur user plane connection. In the configuration shown in Fig. 1, a first CRMS 30 is related to the first cell c1 and a second cell c2, and a second CRMS 31 is related to a third cell c3 and a fourth cell c4. It is noted that, although two CRMSs are shown in this example, there do not have to be provided many CRMSs which are related to one DRNC.

When the lur user plane connection is setup between the SRNC 10 that controls the UE 40 and the DRNC 20 that control the cells c1 to c4, the DRNC 20 returns to the SRNC 10 the address of the SMLC and/or CRMS, e.g. the first CRMS 30 or the second CRMS 31, in charge of controlling the area where the drift cell (cell under control of the DRNC 20 used by the UE 40). The address may be included in the 'response' of the lur user plane setup procedure, e.g. the Radio Link Setup Response, the Radio Link Addition Response, the Common Channel Setup Response or any other suitable response message of the setup procedure. A detailed description of the lur setup procedure can be gathered from the current 3GPP specification TS 25.423 of the lur signalling protocol of the Radio Network Subsystem Application Part (RNSAP).

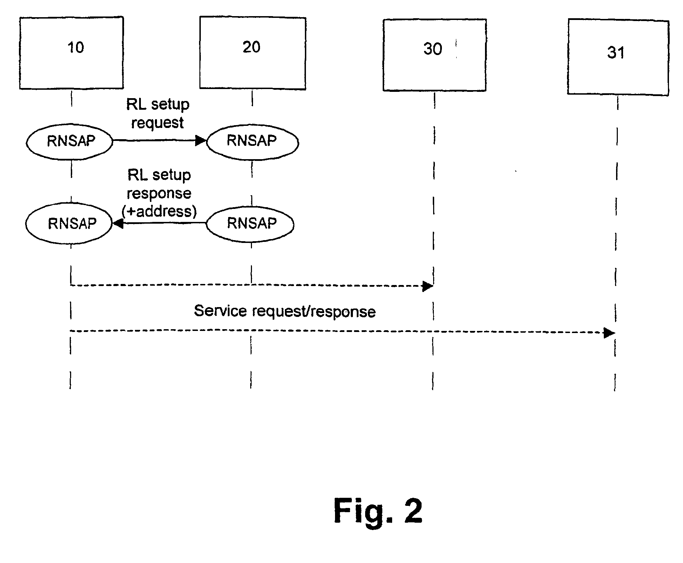

Fig. 2 shows a signaling diagram indicating a RNSAP signaling initiated by the SRNC 10 to obtain the server address of the first or second CRMS 30, 31.

The setup of the first radio link to the DRNC 20 may be done by using one of the following procedures. A common transport channel resources initialization may be performed towards the DRNC 20 using an RACH/FACH (Random Access Channel / Forward Access Channel), if the UE 40 is in the common channel state. Alternatively, as indicated in Fig. 2, a Radio Link (RL) Setup may be initiated by transmitting a RL setup request to the DRNC 20, when the UE 40 is in the dedicated state and the drift cell, i.e. the fist cell c1, is the first one used in that DRNC 20. As another alternative, a Radio Link Addition procedure may be initiated by the SRNC 10, when the UE 40 is in the dedicated state and the drift cell c1 is not the first one used in that DRNC 10.

Then, the DRNC 20 is arranged to add or include in the response messages of those procedures (e.g. common transport channel resource response message, Radio Link setup Response message (as indicated in Fig. 2), Radio Link addition response message or any other suitable response message) identifiers or signalling addresses of the CRMS (e.g. the first and/or second CRMS 30, 31) and/or SMLC in charge of controlling the drift cell c1.

Based on the received identifiers or signaling addresses, the SRNC 10 may now transmit a service request or response (e.g. a handover candidate prioritization) to the associated CRMS, using any suitable signaling, e.g. a RAN Application Part (RANAP) signaling.

The DRNC 20 may as well return other information that allows the SRNC 10 to obtain the address of the server. E.g., the Signaling Connection Control Part (SCCP) address (like Global Title), an identification (ID) assign by the network operator, a DNS (Domain Name Server) address or identification, an IP Address and port number, or the like.

Furthermore, the DRNC 20 may return its own address (or nothing) in case it has incorporated the function of the SMLC and CRMS (which are optional network elements), or in case it wants to receive the service request itself, for any reason.

If the DRNC 20 has more than one CRMS/SMLC associated to the drift cell c1, it may select one case by case (for load sharing, fault resilience, etc.) or it may return more than one address for CRMS and/or SMLC, and the SRNC 10 may select which one to use.

In case the CRMS/SMLC are associated to controllers (RNC) instead of cells (more simplified architecture), the addresses or IDs in the RL Addition Response Message are not needed since the SRNC 10 has already received those IDs or addresses when the first radio link in the DRNC 20 was setup with the RL Setup procedure.

In case of a soft handover in the DRNC 20 (which corresponds to an RL Addition), the two handover cells in the DRNC 20 may be associated to two different servers. Then, the DRNC 20 may either return the ID or address of the servers controlling both the cells, or only one ID or address of the server to be used for that connection.

As already mentioned, the present invention can be implemented in any radio access network and is not restricted to the specific elements of the radio access network according to the preferred embodiments. The invention can be generalised to other 'servers' which may be introduced in future cellular radio access networks. The names of various functional entities, such as the RNC, BSC and the BTS, may be different in different cellular networks. The names used in the context of the preferred embodiments are not intended to limit or restrict the invention. In general any logical interface between two network elements in charge of controlling the use and integrity of radio resources can be used instead of the described lur interface. Moreover, any interconnection between a network element in charge of controlling the use and integrity of the radio resources and a core network can be used instead of the lu interface. The described drift network element may be any network element supporting a serving network element with radio resources when the connection between the radio access network and the user equipment need to use cells controlled by this network element. The serving network element may be any network element terminating the core network interface and being in charge of radio resource control connection between a user equipment and the radio access network. The preferred embodiments may thus vary within the scope of the attached claims.

## Claims

1. A method for addressing a server (30) related to a cell (c1) in a radio access network, said method comprising the step of initiating a setup between a serving controller functionality (10) in charge of controlling a mobile terminal (40) located in said cell (c1), and a drift controller functionality (20) in charge of controlling said cell (c1), wherein a setup response message is transmitted from said drift controller functionality (20) to said serving controller functionality (10);
said method being **characterized by** the steps:
a) adding a server identification identifying said server (30) to said setup response message transmitted from said drift controller functionality (20) to said serving controller functionality (10); and
b) using said server identification at said serving controller functionality (10) to derive the address of said server (30).

2. A method according to claim 1, wherein said setup is initiated by a setup procedure of a logical interface between said serving controller functionality (10) in charge of controlling said mobile terminal (40) located in said cell (c1) and said drift controller functionality (20).

3. A method according to claim 2, wherein said setup procedure comprises a common transport channel resources initialization, a radio link setup procedure, or a radio link addition procedure.

4. A method according to any one of the preceding claims, wherein said setup procedure is selected according to an operating state of said mobile terminal (40).

5. A method according to any one of the preceding claims, wherein said response message is a common transport channel setup response, a radio link setup response, or a radio link addition response.

6. A method according to any one of the preceding claims, wherein said server identification comprises an identifier or signalling address of said server.

7. A method according to any one of claims 1 to 5, wherein said server identification comprises at least one SCCP address, identification assigned by the network operator, DNS address or identification, or IP address and port number, based on which said address of said server (30) is derived.

8. A method according to any one of the preceding claims, wherein said server identification is used to derive the addresses of two servers each controlling a respective cell.

9. A method according to any one of claims 1 to 7, wherein said server identification is used to derive the address of a server to be used for the setup connection if a soft handover is performed.

10. A network element having a serving controller functionality (10) for addressing a server (30) related to a cell (c1) in a radio access network, said network element comprising signalling means for initiating a setup procedure to a drift controller functionality (20) in charge of controlling said cell (c1) and said network element
**being characterized by** address generating means for deriving the address of said server (30) from a setup response message received from said drift controller functionality (20).

11. A network element according to claim 10, wherein said network element is a base transceiver station or a radio network controller or base station controller.

12. A network element having a drift controller functionality (20) in charge of controlling a cell (c1) in a radio access network, said network element comprising means for transmitting a setup response message to a serving controller functionality (10) from which a setup request has been received and said network element
**being characterized by** means for adding a server identification of a server (30), related to said cell (c1), to said setup response message in response to the receipt of said setup request.

13. A network element according to claim 12, wherein said network element is a base transceiver station or a radio network controller or base station controller.

14. A system for addressing a server (30) related to a cell (c1) in a radio access network, said system comprising:
a) a first network element having a serving controller functionality (10) for addressing said server (30) related to said cell (c1) in said radio access network, said first network element comprising signalling means for initiating a setup procedure to a drift controller functionality (20) in charge of controlling said cell (c1); and
b) a second network element having said drift controller functionality (20) in charge of controlling said cell (c1) in said radio access network, said second network element comprising means for transmitting a setup response message to a serving controller functionality (10) from which a setup request has been received;
said system **being characterized in that**
said second network element comprises means for adding a server identification of said server (30) to said setup response message in response to the receipt of said setup request; and
said first network element comprises address generating means for deriving the address of said server (30) from said response message received from said drift controller functionality (20) using said server identification.

15. A system according to claim 14, wherein said serving controller functionality (10) and said drift controller functionality (20) is provided in a corresponding radio network controller or base transceiver station or base station controller.

16. A system according to claim 14 or 15, wherein said drift controller functionality (20) is arranged to return its own address or no address, if it is provided in a network element having also the function of said server (30).

17. A system according to claim 14 or 15, wherein said drift controller functionality (20) is arranged to add more than one server identification to said response message, and said serving controller functionality (10) is arranged to select one server identification.

18. A system according to claim 14 or 15, wherein said server (30) is associated to a controller functionality of said radio access network.

19. A system according to any of claims 14 to 18, wherein said server (30) comprises a common radio resource management functionality and/or a common position calculation functionality.

## Patentansprüche

1. Verfahren zur Adressierung eines Servers (30), welcher auf eine Zelle (c1) in einem Funkzugangsnetz bezogen ist, wobei das Verfahren aufweist den Schritt des Initiierens eines Aufbaus zwischen einer dienenden Steuerungsfunktionalität (10), welche das Steuern eines mobilen in der Zelle (c1) platzierten Endgerätes (40) leitet, und einer Drift-Steuerungsfunktionalität (20), welche das Steuern der Zelle (c1) leitet, wobei eine Aufbau-Antwort-Nachricht von der Drift-Steuerungsfunktionalität (20) zu der dienenden Steuerungsfunktionalität (10) übertragen wird; wobei das Verfahren **gekennzeichnet ist durch** die Schritte des:
a) Hinzufügens einer den Server (30) kennzeichnenden Server-Identifizierung zu der von der Drift-Steuerungsfunktionalität (20) zu den dienenden Steuerungsfunktionalität (10) übertragenen Aufbau-Antwort-Nachricht; und
b) Verwendens der Server-Identifizierung an der dienenden Steuerungsfunktionalität (10), um die Adresse des Servers (30) abzuleiten.

2. Verfahren nach Anspruch 1, wobei der Aufbau mittels einer Aufbauprozedur einer logischen Schnittstelle zwischen der dienenden Steuerungsfunktionalität (10), welche für das Steuern eines mobilen in der Zelle (c1) platzierten Endgerätes (40) zuständig ist, und einer Drift-Steuerungsfunktionalität (20) initiiert wird.

3. Verfahren nach Anspruch 2, wobei die Aufbauprozedur eine Gemeintransportkanal-Ressourcen-Initialisierung, eine Funkverbindungs-Aufbauprozedur oder eine Funkverbindungs-Hinzufügungsprozedur aufweist.

4. Verfahren nach einem der vorangehenden Ansprüche, wobei die Aufbauprozedur gemäß einem Betriebszustand des mobilen Endgerätes (40) ausgewählt wird.

5. Verfahren nach einem der vorangehenden Ansprüche, wobei die Antwortnachricht eine Gemeintransportkanal-Aufbauantwort, eine Funkverbindungs-Aufbauantwort oder eine Funkverbindungs-Hinzufügungsantwort ist.

6. Verfahren nach einem der vorangehenden Ansprüche, wobei die Server-Identifizierung eine Identifizierung oder eine Signalisierungsadresse des Servers aufweist.

7. Verfahren nach einem der Ansprüche 1 bis 5, wobei die Server-Identifizierung zumindest eine von dem Netzbetreiber zugewiesene SCCP-Adresse, -Identifizierung, eine DNS-Adresse oder -Identifizierung oder eine IP-Adresse und eine Port-Nummer aufweist, auf deren Grundlage die Adresse des Servers (30) abgeleitet wird.

8. Verfahren nach einem der vorangehenden Ansprüche, wobei die Server-Identifizierung verwendet wird, um die Adressen von zwei, jeweils eine entsprechende Zelle steuernden Servern abzuleiten.

9. Verfahren nach einem der Ansprüche 1 bis 7, wobei die Server-Identifizierung verwendet wird, um die Adresse eines Servers abzuleiten, welcher für den Verbindungsaufbau zu verwenden ist, falls ein Soft-Handover durchgeführt wird.

10. Netzelement mit einer dienenden Steuerungsfunktionalität (10) zur Adressierung eines Servers (30), welcher auf eine Zelle (c1) in einem Funkzugangsnetz bezogen ist, wobei das Netzelement Signalisierungsmittel aufweist zur Initiierung einer Aufbauprozedur an eine Drift-Steuerungsfunktionalität (20), welche für das Steuern der Zelle (c1) und des Netzelementes zuständig ist, wobei das Netzelement
**gekennzeichnet ist durch** Adressgenerierungsmittel zum Ableiten der Adresse des Servers (30) von einer von der Drift-Steuerungsfunktionalität (20) erhaltenen Aufbau-Antwort-Nachricht.

11. Netzelement nach Anspruch 10, wobei das Netzelement eine Basisstation oder ein Funknetz-Kontrollrechner, oder ein Basisstations-Kontrollrechner ist.

12. Netzelement mit einer Drift-Steuerungsfunktionalität (20), welche für das Steuern einer Zelle (c1) in einem Funkzugriffsnetz zuständig ist, wobei das Netzelement Mittel zum Übertragen einer Aufbau-Antwort-Nachricht an eine dienende Steuerungsfunktionalität (10) aufweist, von welcher eine Aufbau-Anfrage erhalten wurde, und wobei das Netzelement
**gekennzeichnet ist durch** Mittel zum Hinzufügen einer Server-Identifizierung eines Servers (30), welcher auf die Zelle (c1) bezogen ist, an die Aufbau-Antwort-Nachricht als Antwort auf das Erhalten der Aufbau-Anfrage.

13. Netzelement nach Anspruch 12, wobei das Netzelement eine Basisstation oder ein Funknetz-Kontrollrechner, oder ein Basisstations-Kontrollrechner ist.

14. System zur Adressierung eines Servers (30), welcher auf eine Zelle (c1) in einem Funkzugangsnetz bezogen ist, wobei das System aufweist:
a) ein erstes Netzelement mit einer dienenden Steuerungsfunktionalität (10) zur Adressierung des Servers (30), welcher auf die Zelle (c1) in dem Funkzugangsnetz bezogen ist, wobei das erste Netzelement Signalisierungsmittel aufweist zur Initiierung einer Aufbauprozedur zu einer Drift-Steuerungsfunktionalität (20), welche für das Steuern der Zelle (c1) zuständig ist; und
b) ein zweites Netzelement mit der Drift-Steuerungsfunktionalität (20), welche für das Steuern der Zelle (c1) in dem Funkzugriffsnetz zuständig ist, wobei das zweite Netzelement Mittel zum Übertragen einer Aufbau-Antwort-Nachricht an eine dienende Steuerungsfunktionalität (10) aufweist, von welcher eine Aufbau-Anfrage erhalten wurde;
wobei das System **dadurch gekennzeichnet ist, dass**
das zweite Netzelement Mittel aufweist zum Hinzufügen einer Server-Identifizierung des Servers (30) an die Aufbau-Antwort-Nachricht als Antwort auf das Erhalten der Aufbau-Anfrage; und
das erste Netzelement Adressgenerierungsmittel aufweist zum Ableiten der Adresse des Servers (30) von der Aufbau-Antwort-Nachricht, welche von der die Server-Identifizierung verwendenden Drift-Steuerungsfunktionalität (20) erhalten wird.

15. System nach Anspruch 14, wobei die dienende Steuerungsfunktionalität (10) und die Drift-Steuerungsfunktionalität (20) in einem entsprechenden Funknetz-Kontrollrechner oder Basisstation, oder Basisstations-Kontrollrechner bereitgestellt ist.

16. System nach Anspruch 14 oder 15, wobei die Drift-Steuerungsfunktionalität (20) angeordnet ist, ihre eigene Adresse oder keine Adresse zurückzusenden, falls sie in einem Netzelement bereitgestellt ist, das ebenfalls die Funktion des auf die Zelle bezogenen Servers (30) aufweist.

17. System nach Anspruch 14 oder 15, wobei die Drift-Steuerungsfunktionalität (20) ausgestaltet ist, um mehr als eine Server-Identifizierung zu der Antwort-Nachricht hinzuzufügen, und die dienende Steuerungsfunktionalität (10) angeordnet ist, genau eine Server-Identifizierung auszuwählen.

18. System nach Anspruch 14 oder 15, wobei der Server (30) mit einer Steuerungsfunktionalität des Funkzugangsnetzes verknüpft ist.

19. System nach einem der Ansprüche 14 bis 18, wobei der Server (30) eine allgemeine Funkressourcen-Managementfunktionalität und/oder eine allgemeine Positionsberechnungsfunktionalität aufweist.

## Revendications

1. Procédé pour adresser un serveur (30) associé à une cellule (c1) dans un réseau d'accès radio, ledit procédé comprenant l'étape consistant à initier une mise en place entre une fonctionnalité de contrôleur de desserte (10) en charge de commander un terminal mobile (40) situé dans ladite cellule (c1), et une fonctionnalité de contrôleur de dérive (20) en charge de commander ladite cellule (c1), dans lequel un message de réponse de mise en place est transmis de ladite fonctionnalité de contrôleur de dérive (20) à ladite fonctionnalité de contrôleur de desserte (10) ;
ledit procédé étant **caractérisé par** les étapes consistant à :
a) ajouter une identification de serveur identifiant ledit serveur (30) audit message de réponse de mise en place transmis à partir de ladite fonctionnalité de contrôleur de dérive (20) à ladite fonctionnalité de contrôleur de desserte (10) ; et
b) utiliser ladite identification de serveur au niveau de ladite fonctionnalité de contrôleur de desserte (10) pour dériver l'adresse dudit serveur (30).

2. Procédé selon la revendication 1, dans lequel ladite mise en place est initiée par une procédure de mise en place d'une interface logique entre ladite fonctionnalité de contrôleur de desserte (10) en charge de commander ledit terminal mobile (40) situé dans ladite cellule (c1) et ladite fonctionnalité de contrôleur de dérive (20).

3. Procédé selon la revendication 2, dans lequel ladite procédure de mise en place comprend une initialisation de ressources de canal de transport commun, une procédure de mise en place de liaison radio ou une procédure d'addition de liaison radio.

4. Procédé selon l'une quelconque des revendications précédentes, dans lequel ladite procédure de mise en place est choisie selon un état de fonctionnement dudit terminal mobile (40).

5. Procédé selon l'une quelconque des revendications précédentes, dans lequel ledit message de réponse est une réponse de mise en place de canal de transport commun, une réponse de mise en place de liaison radio ou une réponse d'addition de liaison radio.

6. Procédé selon l'une quelconque des revendications précédentes, dans lequel ladite identification de serveur comprend une adresse d'identificateur ou de signalisation dudit serveur.

7. Procédé selon l'une quelconque des revendications 1 à 5, dans lequel ladite identification de serveur comprend au moins une adresse SCCP, une identification attribuée par l'opérateur du réseau, une adresse ou identification DNS, ou une adresse IP et un numéro de port, sur la base desquelles ladite adresse dudit serveur (30) est dérivée.

8. Procédé selon l'une quelconque des revendications précédentes, dans lequel ladite identification de serveur est utilisée pour dériver les adresses de deux serveurs commandant chacun une cellule respective.

9. Procédé selon l'une quelconque des revendications 1 à 7, dans lequel ladite identification de serveur est utilisée pour dériver l'adresse d'un serveur à utiliser pour la connexion de mise en place si un transfert intercellulaire sans coupure est effectué.

10. Elément de réseau comportant une fonctionnalité de contrôleur de desserte (10) destinée à adresser un serveur (30) associé à une cellule (c1) dans un réseau d'accès radio, ledit élément de réseau comprenant des moyens de signalisation destinés à initier une procédure de mise en place à une fonctionnalité de contrôleur de dérive (20) en charge de commander ladite cellule (c1) et ledit élément de réseau, **caractérisé par** des moyens de génération d'adresse destinés à dériver l'adresse dudit serveur (30) à partir d'un message de réponse de mise en place reçu à partir de ladite fonctionnalité de contrôleur de dérive (20).

11. Elément de réseau selon la revendication 10, dans lequel ledit élément de réseau est une station émettrice réceptrice de base ou un contrôleur de réseau radio ou un contrôleur de station de base.

12. Elément de réseau ayant une fonctionnalité de contrôleur de dérive (20) en charge de commander une cellule (c1) dans un réseau d'accès radio, ledit élément de réseau comprenant des moyens destinés à transmettre un message de réponse de mise en place à une fonctionnalité de contrôleur de desserte (10) à partir de laquelle une requête de mise en place a été reçue et ledit élément de réseau
étant **caractérisé par** des moyens destinés à ajouter une identification de serveur d'un serveur (30), associé à ladite cellule (c1), audit message de réponse de mise en place en réponse à la réception de ladite requête de mise en place.

13. Elément de réseau selon la revendication 12, dans lequel ledit élément de réseau est une station émettrice réceptrice de base ou un contrôleur de réseau radio ou un contrôleur de station de base.

14. Système pour adresser un serveur (30) associé à une cellule (c1) dans un réseau d'accès radio, ledit système comprenant :
a) un premier élément de réseau ayant une fonctionnalité de contrôleur de desserte (10) destiné à adresser ledit serveur (30) associé à ladite cellule (c1) dans ledit réseau d'accès radio, ledit premier élément de réseau comprenant des moyens de signalisation destinés à initier une procédure de mise en place à une fonctionnalité de contrôleur de dérive (20) en charge de commander ladite cellule (c1) ; et
b) un second élément de réseau ayant ladite fonctionnalité de contrôleur de dérive (20) en charge de commander ladite cellule (c1) dans ledit réseau d'accès radio, ledit second élément de réseau comprenant des moyens destinés à transmettre un message de réponse de mise en place à une fonctionnalité de contrôleur de desserte (10) à partir de laquelle une requête de mise en place a été reçue ;
ledit système étant **caractérisé en ce que**
ledit second élément de réseau comprend des moyens destinés à ajouter une identification de serveur dudit serveur (30) audit message de réponse de mise en place en réponse à la réception de ladite requête de mise en place ; et
ledit premier élément de réseau comprend des moyens de génération d'adresse destinés à dériver l'adresse dudit serveur (30) à partir dudit message de réponse reçu à partir de ladite fonctionnalité de contrôleur de dérive (20) en utilisant ladite identification de serveur.

15. Système selon la revendication 14, dans lequel ladite fonctionnalité de contrôleur de desserte (10) et la fonctionnalité de contrôleur de dérive (20) sont prévues dans un contrôleur de réseau radio correspondant ou une station émettrice réceptrice de base ou un contrôleur de station de base.

16. Système selon la revendication 14 ou 15, dans lequel ladite fonctionnalité de contrôleur de dérive (20) est agencée pour renvoyer sa propre adresse ou aucune adresse, si elle est fournie dans un élément de réseau ayant également la fonction dudit serveur (30).

17. Système selon la revendication 14 ou 15, dans lequel ladite fonctionnalité de contrôleur de dérive (20) est agencée pour ajouter plus d'une identification de serveur audit message de réponse, et ladite fonctionnalité de contrôleur de desserte (10) est agencée pour sélectionner une identification de serveur.

18. Système selon la revendication 14 ou 15, dans lequel ledit serveur (30) est associé à une fonctionnalité du contrôleur dudit réseau d'accès radio.

19. Système selon l'une quelconque des revendications 14 à 18, dans lequel ledit serveur (30) comprend une fonctionnalité de gestion de ressources de radio commune et/ou une fonctionnalité de calcul de position commune.
